# FASCICULE DE BREVET EUROPEEN

(11) **EP 1 905 556 B1**
(45) Date de publication et mention de la délivrance du brevet: **02.09.2009**
(21) Numéro de dépôt: 07117438.7
(22) Date de dépôt: 27.09.2007
(51) Int. Cl.: B26D 3/28, A47J 43/25, B26D 1/26, B26D 1/00

(54) **Dispositif de lame tournante pour appareil à débiter le fromage**
Vorrichtung mit Drehklinge zum Schneiden von Käse
Device with rotating blade for cheese-cutting appliance

(30) Priorité: 27.09.2006 CH 15412006
(43) Date de publication de la demande: 02.04.2008
(73) Titulaire: Metafil Lagirolle SA, 2718 Lajoux (CH)
(72) Inventeur: Mérillat, Sébastien, 2500 Bienne (CH); Rom, Pierre, 2606 Corgémont (CH)
(74) Mandataire: Ganguillet, Cyril

(56) Documents cités:
- EP-A- 0 081 466
- WO-A-03/051587
- WO-A-20/05014244
- US-A- 4 449 299

## Description

### Domaine technique

La présente invention concerne un appareil à débiter circulairement un fromage, et plus particulièrement un dispositif de lame tournante destiné à prélever un mince voile et elle vise en conséquence des fromages de forme globalement cylindrique et dont la pâte est suffisamment dure pour se prêter à une coupe mince, voire très mince.

### Etat de la technique

Un appareil à débiter circulairement un fromage de forme cylindrique à pâte mi-dure par raclage, à savoir par écrasement localisé puis détachement et accumulation d'une couche de pâte déstructurée, au moyen d'une lame tournante, est connu du brevet européen 0081466 A1.

Par rapport à cet état de la technique, la présente invention apporte des modifications de deux ordres. La première a trait au type de fromage que l'appareil permet de débiter, en l'occurrence un fromage à pâte dure, par opposition à la pâte mi-dure indispensable dans l'état de la technique ci-dessus. La deuxième a trait exclusivement à la configuration de la lame tournante, agencée de façon à trancher le fromage et non à le racler. En revanche, les autres éléments de l'état de la technique sont repris tels quels et ne participent pas au caractéristiques nouvelles de l'invention.

Pour être complet, on relève dans l'état de la technique des versions sophistiquées du fil à couper le beurre, qui mettent en jeu un arbre vertical autour duquel tourne un bras de coupe horizontal comportant, monté et tendu en dessous de lui, un fil à couper qui lui est parallèle. Ces propositions, dont notamment WO 2005/014244 A1 ou WO 03/051587 A1, concernent explicitement le débit du fromage en tranches. On doit aussi tenir pour acquis dans l'état de la technique que l'épaisseur des tranches que ces appareils permettent de débiter équivaut au maximum à la distance qui sépare le bas du bras tournant du fil à couper. II y a tout lieu de penser aussi que l'épaisseur de ces tranches peut être ajustée en augmentant ou diminuant la distance séparant le fil du bras. Cependant, si l'augmentation de l'épaisseur des tranches est sans doute limitée par des contraintes mécaniques résultant de l'augmentation des leviers, la diminution de cette épaisseur se heurte à la nature du fil de coupe qui est inopérant si la tranche devient particulièrement fine car, invariablement, il la déchire ou l'arrache alors et rend le résultat sans aucun intérêt de quelque ordre que ce soit.

Dans le cas de l'appareil à racler connu mentionné plus haut, au delà du caractère fort esthétique des rosettes de fromage que l'appareil à racler permet de réaliser, un effet gustatif est aussi recherché et fourni. En effet l'écrasement et la déstructuration de la couche de fromage prélevée par la lame conduit à une libération des arômes bien supérieure à ce qu'elle est si le même fromage est simplement consommé en morceaux, voire même en tranche.

Un tel effet ne peut être recherché que si le fromage utilisé a précisément la dureté et la consistance qui conviennent, c'est-à-dire un fromage à pâte mi-dure. En revanche, pour un fromage dont la dureté est plus importante, le processus d'écrasement, puis de prélèvement d'une couche de pâte déstructurée ne se produit pas, la libération accentuée des arômes non plus, pas davantage d'ailleurs que le résultat esthétique.

Certes, on peut toujours râper de tels fromages. Cependant, le fromage râpé ne convient que si l'on en saupoudre un plat et il ne constitue pas, tant pratiquement que culturellement, une présentation destinée à consommer le fromage pour lui-même, sauf peut-être pour quelques enfants vite réprimandés.

### But de l'invention

Le but de la présente invention n'est pas de proposer une amélioration de l'état de la technique et ne vise donc pas un appareil qui ferait mieux ce que d'autres ont fait avant lui. Le but de la présente invention est de proposer au consommateur final, à la ménagère, une lame, compatible avec l'appareil déjà connu, qui lui permette de débiter le fromage à pâte dure d'une manière inconnue jusqu'ici, à savoir en tranche si fine qu'elle s'apparente à un voile de fromage, cela de manière à offrir une présentation en vue de la consommation qui ait un effet esthétique soit d'enroulement en spirale conique, soit de plissage en godrons, tous deux inconnus jusqu'ici; et finalement qui permette aussi une plus grande libération des arômes que dans le cas d'une consommation en morceaux ou en tranches moins fines.

A cette fin, la présente invention concerne un dispositif de lame tournante pour appareil à débiter le fromage comportant un socle généralement circulaire muni d'un arbre vertical monté en son centre, la lame comportant à l'une de ses extrémités une bague cylindrique lui permettant de tourner librement autour de l'arbre vertical et de coulisser verticalement le long dudit arbre vertical, la lame comportant à son extrémité opposée à la bague une tige de manutention terminée par un embout à main, la lame se distinguant par le fait qu'elle est incurvée en forme de chasse-neige et que son bord d'attaque inférieur est horizontal et qu'il est affûté et tranchant, le plat du tranchant étant sensiblement horizontal et réalisé dans l'épaisseur de la lame, et par le fait que la base de la bague cylindrique et la base de la tige de manutention sont reliées par un élément horizontal aux bords et angles arrondis, ledit élément constituant un patin et étant fixé à la bague et à la tige de manière à se trouver en avant du bord de coupe dans le sens de rotation et parallèle au bord de coupe, ledit patin constituant dans cette configuration un guide de profondeur de coupe permettant de débiter de façon régulière une tranche fine de fromage non déstructuré dont l'épaisseur est de l'ordre du millimètre ou de la fraction de millimètre.

La lame se distingue aussi par le fait qu'elle est soit principalement constituée d'un demi cylindre creux, soit d'un secteur tiré d'un cône creux, parfait ou non.

L'invention est définie dans les revendications 1, 5 et 6.

### Description de formes d'exécutions préférentielles de l'invention

On décrit ci-dessous, à titre d'exemples non limitatifs, deux formes d'exécution de l'appareil selon l'invention, en se référant au dessin dans lequel :

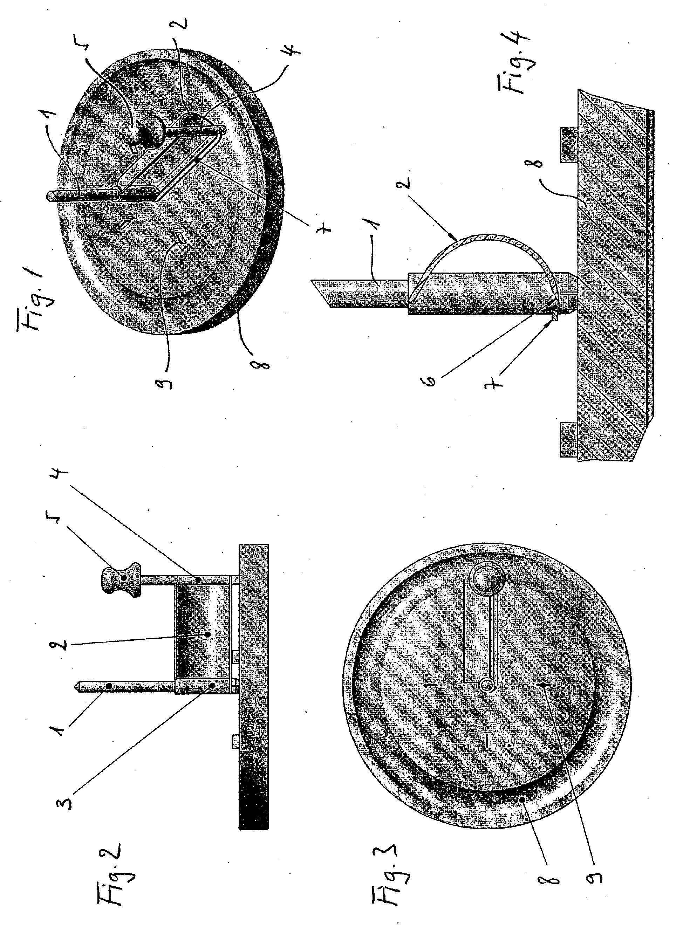

Les figures 1 à 4 illustrent une première forme d'exécution d'un appareil comportant un dispositif de lame tournante selon l'invention, la figure 1 étant une vue en perspective, la figure 2 une vue latérale, la figure 3 une vue depuis dessus et la figure 4 une vue en coupe verticale au milieu de la lame.

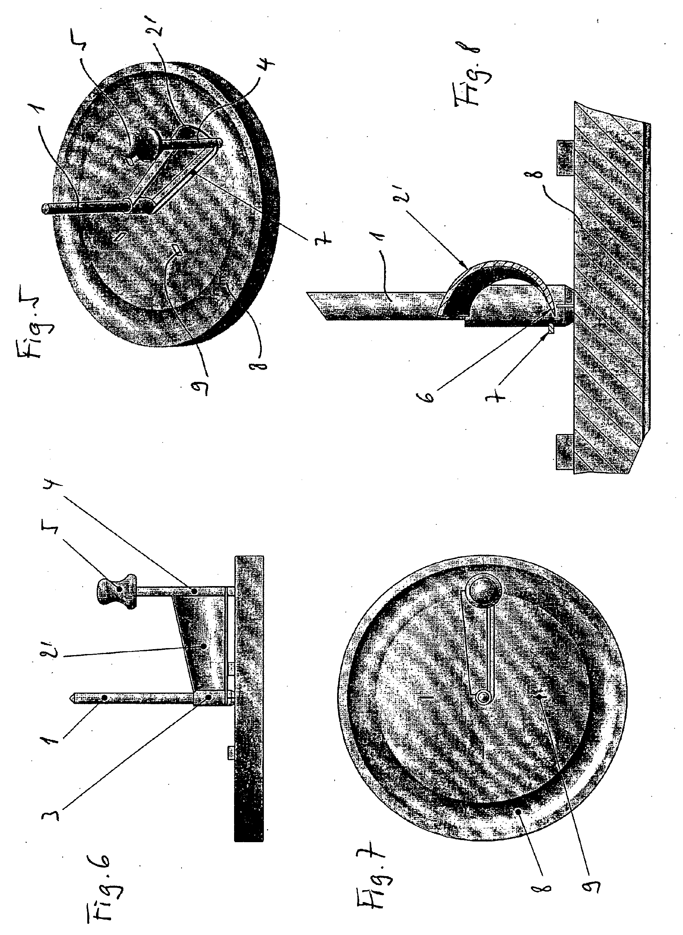

Les figures 5 à 8 illustrent une seconde forme d'exécution d'un appareil comportant un dispositif de lame tournante selon l'invention, la figure 5 étant une vue en perspective, la figure 6 une vue latérale, la figure 7 une vue depuis dessus et la figure 8 une vue en coupe verticale au milieu de la lame.

Avant de décrire en détail chacune des deux formes d'exécution préférentielles de l'appareil et plus particulièrement de la lame selon l'invention on rappelle que, comme on l'a dit plus haut dans le préambule, par rapport à l'état de la technique connu du brevet européen 0081466 A1, seul le dispositif de lame tournante fait l'objet de transformations par ajout de trois caractéristiques qui sont communes aux deux formes d'exécution décrites ci-après. En premier lieu, la lame est affûtée et donc tranchante sur son bord de coupe, de façon à débiter des tranches de fromage et non à le racler. En deuxième lieu, la lame n'est pas plate, mais au contraire incurvée comme la lame d'un chasse-neige. En troisième lieu, la lame est pourvue d'un patin horizontal qui la précède dans le sens de la rotation et qui sert de guide de profondeur de coupe.

Pour le reste, la lame est fixée sur une bague cylindrique dont le diamètre intérieur est choisi pour permettre de l'engager sur l'arbre décrit dans l'état de la technique, et de tourner et coulisser librement autour de celui-ci.

On a représenté sur les figures 1 à 4 un appareil à débiter le fromage comportant une première forme d'exécution du dispositif de lame tournante selon l'invention. On reconnaît le plateau 8 de l'appareil, l'arbre 1 bien connu autour duquel tourne la lame 2 et les courtes lames de maintien 9 destinées à empêcher que le fromage puisse se mettre en rotation sous l'action de la lame 2. La lame 2 est solidaire d'une bague cylindrique 3 ici représentée engagée sur l'arbre 1 comme on l'a dit plus haut. A l'autre extrémité de la lame 2 est fixée, parallèlement à l'arbre 1, une tige de manutention 4 terminée par un embout 5 destiné à être manoeuvré par la main de l'opérateur. L'embout 5 peut être monté solidaire de la tige 4, ou en pivot libre, ce qui est plus agréable pour l'utilisateur.

La lame 2 a une forme de demi cylindre creux, plus prosaïquement d'un tronçon de tuyau coupé en deux dans le sens de la longueur, et son bord de coupe 6 est affûté et tranchant. Le plat du tranchant est réalisé dans l'épaisseur du demi cylindre creux et se trouve sensiblement dans un plan normal à l'arbre 1.

La base de la bague cylindrique 3 et celle de la tige 5 sont reliées par un patin 7, positionné devant la lame 2 dans le sens de rotation. Ce patin est constitué d'un élément non coupant, dont les extrémités et la tranche d'attaque sont arrondies et les arêtes adoucies, cela d'une part pour éviter qu'il puisse mordre dans la pâte du fromage et d'autre part pour éviter que l'opérateur puisse se blesser ou se couper en manipulant la lame, notamment pour la laver.

Le patin 7 sert de guide de profondeur de coupe. Il empêche que la lame plonge dans le fromage et assure une coupe régulière en ce qui concerne la fine épaisseur de la tranche ou voile de fromage prélevé par la lame. Le positionnement exact de la face inférieure du patin 7 par rapport au bord de coupe de la lame détermine l'épaisseur du voile prélevé. Mesurée parallèlement à l'arbre 1, la différence de hauteur entre la face inférieure du patin et le bord de coupe de la lame est de l'ordre du millimètre ou préférablement de la fraction de millimètre.

Selon cette première variante, c'est-à-dire avec une lame de forme demi cylindrique, on peut obtenir, avec un fromage à pâte dure présentant à la fois de la tenue et une certaine souplesse à la coupe fine, un résultat tout à fait surprenant. En effet, le voile de fromage, dont la matière n'est pas déstructurée, remonte le long de la lame jusqu'à son bord supérieur, puis poursuit son chemin comme le ferait le rouleau d'une vague puis se dépose largement en avant du patin, formant des godrons rappelant le dessin des collerettes de dentelle, ou fraises, portées autour du cou au XVlème et XVllème siècles.

On a représenté sur les figures 5 à 8 un appareil à débiter le fromage comportant une deuxième forme d'exécution du dispositif de lame tournante selon l'invention. On reconnaît les éléments déjà décrits, avec une différence notable, à savoir que la lame 2' n'est cette fois pas une partie de cylindre creux, mais présente une forme évasée rappelant celle d'un tronçon de cône, plus petit aux abords de la bague 3, plus ample aux abords de la tige de manutention 4. A part cette caractéristique de conicité, il n'y a aucune autre différence structurelle ou fonctionnelle entre les deux formes d'exécution. Cependant, avec une forme de type conique, la lame favorise l'enroulement en spirale du voile de fromage prélevé. Esthétique, mais moins spectaculaire que la fraise produite par la première variante, l'enroulement en spirale offre une surprise à la dégustation cette fois. En effet, le cornet de fromage finement enroulé sur lui-même crée en bouche une première sensation de feuilleté fort agréable, suivie d'une explosion d'arômes à la mastication.

Pour les deux formes d'exécution, lorsqu'il s'agit de produire de petites séries, on utilisera pour confectionner la lame 2' et le patin 7 un acier inox de qualité alimentaire. Cependant, une exécution en matière synthétique injectées, un plastique de qualité alimentaire, convient aussi. Enfin, une combinaison plastique-métal est envisageable aussi pour réaliser la lame 2', en ce sens que la partie supérieure en plastic joue alors le rôle de porte-lame auquel est fixé ou rapporté une lame métallique de faible hauteur apportant un tranchant plus vif et plus durable, propre de l'acier.

Les avantages du dispositif de lame selon l'invention sont d'étendre le champ d'application de l'appareil déjà connu à d'autres fromages, à pâte plus dure que celle du fromage associé à l'appareil connu. L'effet nouveau apporté par l'invention est aussi d'offrir une alternative à la rosette déjà connue en ce qui concerne l'aspect esthétique et les particularités à la dégustation du fromage ainsi débité.

## Revendications

1. Dispositif de lame tournante pour appareil à débiter le fromage comportant un socle (8) généralement circulaire muni d'un arbre vertical (1) monté en son centre, la lame (2) comportant à l'une de ses extrémités une bague cylindrique (3) lui permettant de tourner librement autour de l'arbre vertical (1) et de coulisser verticalement le long dudit arbre, la lame comportant à son extrémité opposée à la bague une tige de manutention (4) terminée par un embout à main (5), **caractérisé par le fait que** la lame (2) est incurvée en forme de chasse-neige et que son bord d'attaque inférieur (6) est horizontal et qu'il est affûté et tranchant, le plat du tranchant étant sensiblement horizontal et réalisé dans l'épaisseur de la lame, et en ce que la base de la bague cylindrique (3) et la base de la tige de manutention (4) sont reliées par un élément horizontal (7) aux bords et angles arrondis, ledit élément constituant un patin et étant fixé à la bague (3) et à la tige (4) de manière à se trouver en avant du bord de coupe (6) dans le sens de rotation et parallèle au bord de coupe (6), ledit patin (7) constituant dans cette configuration un guide de profondeur de coupe permettant de débiter de façon régulière une tranche fine de fromage non déstructuré.

2. Dispositif selon la revendication 1, **caractérisé en ce que** l'ensemble lame-patin est agencé de façon à constituer un guide de profondeur de coupe permettant d'obtenir une tranche de fromage dont l'épaisseur est de l'ordre du millimètre ou de la fraction de millimètre.

3. Dispositif selon l'une des revendications 1 ou 2, **caractérisé en ce que** la lame (2) est principalement constituée d'un demi cylindre creux.

4. Dispositif selon l'une des revendications 1 ou 2, **caractérisé en ce que** la lame (2') est principalement constituée d'un secteur tiré d'un cône creux, parfait ou non.

5. Utilisation d'une lame en forme de demi cylindre creux pour débiter du fromage en tranches.

6. Lame pour le dispositif selon l'une des revendications 1 à 4, **caractérisée en ce qu'**elle comporte un secteur tiré d'un cône creux, parfait ou non.

7. Appareil à débiter le fromage comportant un socle (8) généralement circulaire muni d'un arbre vertical (1) monté en son centre et un dispositif de lame tournante selon l'une des revendications 1 à 4.

## Claims

1. A rotating blade device for an apparatus for cutting cheese, comprising a generally circular base (8) provided with a vertical shaft (1) mounted in the centre thereof, the blade (2) comprising at one of its ends a cylindrical collar (3) allowing it to rotate freely about the vertical shaft (1) and to slide vertically along said shaft, the blade comprising at its opposite end from the collar a handling rod (4) capped by a handpiece (5), **characterised in that** the blade (2) is curved in the form of a snowplough and that its lower attacking edge (6) is horizontal and that it is pointed and sharp, the flat of the cutting edge being substantially horizontal and formed within the thickness of the blade, and **in that** the bottom of the cylindrical collar (3) and the foot of the handling rod (4) are connected together by a horizontal element (7) with rounded edges and angles, said element constituting a skid and being fixed to the collar (3) and the rod (4) in such a way as to be situated in front of the cutting edge (6) in the direction of rotation and parallel to the cutting edge (6), said skid (7) constituting in this configuration a cutting depth guide allowing regular cutting of a thin slice of non-disintegrated cheese.

2. A device according to claim 1, **characterised in that** the blade/skid assembly is arranged so as to constitute a cutting depth guide allowing the obtainment of a slice of cheese, the thickness of which is of the order of a millimetre or a fraction of a millimetre.

3. A device according to either one of claims 1 or 2, **characterised in that** the blade (2) consists principally of a hollow half-cylinder.

4. A device according to either one of claims 1 or 2, **characterised in that** the blade (2') consists principally of a sector taken from a perfect or imperfect hollow cone.

5. Use of a blade in the form of a hollow half-cylinder to cut cheese into slices.

6. A blade for the device according to any one of claims 1 to 4, **characterised in that** it comprises a sector taken from a perfect or imperfect hollow cone.

7. An apparatus for cutting cheese, comprising a generally circular base (8) provided with a vertical shaft (1) mounted in the centre thereof and a rotating blade device according to any one of claims 1 to 4.

## Patentansprüche

1. Vorrichtung mit Drehklinge zum Schneiden von Käse, umfassend einen im Allgemeinen kreisförmigen Sockel (8) mit einer in seinem Mittelpunkt montierten vertikalen Welle (1), wobei die Klinge (2) an einem ihrer Enden einen zylindrischen Ring (3) umfasst, der es ihr ermöglicht, frei um die vertikale Welle (1) zu drehen und an dieser Welle vertikal entlang zu gleiten, wobei die Klinge an ihrem dem Ring gegenüberliegenden Ende eine Handhabungsstange (4) umfasst, die in einem Handstück (5) endet, **dadurch gekennzeichnet, dass** die Klinge (2) schneepflugartig gebogen ist und dass ihre untere Schneidkante (6) horizontal ist und dass sie geschliffen und scharf ist, wobei die Flachseite der Schneide annähernd horizontal und in der Dicke der Klinge ausgeführt ist, und dass die Unterseite des zylindrischen Rings (3) und die Unterseite der Handhabungsstange (4) über ein horizontales Element (7) mit gerundeten Kanten und Ecken verbunden sind, das einen Fuß bildet und an dem Ring (3) und der Stange (4) so befestigt ist, dass es sich vor der Schneidkante (6) in Drehrichtung und parallel zur Schneidkante (6) befindet, wobei dieser Fuß (7) bei dieser Anordnung eine Schnitttiefenführung darstellt, die es ermöglicht, eine dünne Scheibe Käse ohne Strukturverlust gleichmäßig zu schneiden.

2. Vorrichtung nach Anspruch 1, **dadurch gekennzeichnet, dass** die Anordnung Klinge/Fuß so angeordnet ist, dass sie eine Schnitttiefenführung bildet, die es ermöglicht, eine Scheibe Käse zu erhalten, deren Dicke ungefähr einen Millimeter oder den Bruchteil eines Millimeters beträgt.

3. Vorrichtung nach einem der Ansprüche 1 oder 2, **dadurch gekennzeichnet, dass** die Klinge (2) hauptsächlich aus einem hohlen Halbzylinder besteht.

4. Vorrichtung nach einem der Ansprüche 1 oder 2, **dadurch gekennzeichnet, dass** die Klinge (2') hauptsächlich aus einem Sektor aus einem vollkommenen oder nicht vollkommenen Hohlkegel besteht.

5. Verwendung einer Klinge in Form eines hohlen Halbzylinders zum Schneiden von Käse in Scheiben.

6. Klinge für die Vorrichtung nach einem der Ansprüche 1 bis 4, **dadurch gekennzeichnet, dass** sie einen Sektor aus einem vollkommenen oder nicht vollkommenen Hohlkegel umfasst.

7. Gerät zum Schneiden von Käse mit einem im Allgemeinen kreisförmigen Sockel (8) mit einer in seinem Mittelpunkt montierten vertikalen Welle (1) und einer Vorrichtung mit Drehklinge nach einem der Ansprüche 1 bis 4.
